# EUROPÄISCHE PATENTSCHRIFT

(11) **EP 4 423 841 B1**
(45) Veröffentlichungstag und Bekanntmachung des Hinweises auf die Patenterteilung: **07.05.2025**
(21) Anmeldenummer: 22797744.4
(22) Anmeldetag: 30.09.2022
(51) Int. Cl.: H01M 50/367, H01M 50/383

(54) **BATTERIEBRANDVERHINDERUNGSSYSTEM UND VERFAHREN ZUR VERHINDERUNG EINES AUS EINEM THERMISCHEN DURCHGEHEN EINER BATTERIEZELLE RESULTIERENDEN BATTERIEBRANDS**
BATTERY FIRE PREVENTION SYSTEM, AND METHOD FOR PREVENTING A BATTERY FIRE RESULTING FROM THERMAL RUNAWAY OF A BATTERY CELL
SYSTÈME ANTI-FEU DE BATTERIE ET PROCÉDÉ POUR EMPÊCHER UN FEU DE BATTERIE RÉSULTANT D'UN EMBALLEMENT THERMIQUE D'UN ÉLÉMENT DE BATTERIE

(30) Priorität: 25.10.2021 DE 102021127623
(43) Veröffentlichungstag der Anmeldung: 04.09.2024
(73) Patentinhaber: Audi AG, 85045 Ingolstadt (DE)
(72) Erfinder: LORENZ, Carsten, 85084 Reichertshofen (DE); SCHNEIDER, Paul, 85098 Großmehring (DE)
(86) Internationale Anmeldenummer: PCT/EP2022/077259
(87) Internationale Veröffentlichungsnummer: WO 2023/072523

(56) Entgegenhaltungen:
- EP-B1- 2 907 185
- WO-A1-2022/033994
- DE-A1- 102018 122 080
- DE-A1- 102021 105 848

## Beschreibung

Die Erfindung betrifft ein Batteriebrandverhinderungssystem für eine mehrere Batteriezellen umfassende Batterie eines Kraftfahrzeugs zur Verhinderung eines aus einem thermischen Durchgehen einer der Batteriezellen resultierenden Batteriebrands. Des Weiteren betrifft die Erfindung auch ein Verfahren zur Verhinderung eines aus einem thermischen Durchgehen einer Batteriezelle resultierenden Batteriebrands.

Batterien für Elektro- oder Hybridfahrzeuge sind üblicherweise als Hochvoltbatterien ausgebildet und umfassen vielzählige Batteriezellen. Dabei kann es unter Umständen, zum Beispiel im Falle eines Unfalls oder eines Defekts oder eines Kurzschlusses einer Batteriezelle, zu einem thermischen Durchgehen einer solchen Batteriezelle kommen. Damit einhergehend erwärmt sich diese Batteriezelle sehr stark und es kommt letztendlich zu einem Gasaustritt aus dieser Batteriezelle, üblicherweise über eine in der Zelle vorgesehene freigebbare Gasaustrittsöffnung. Von diesem austretenden Gasstrom sind auch Partikel umfasst, die zum Teil elektrisch leitfähig sind. Ohne weitere Gegenmaßnahmen können sich diese Partikel im Batteriegehäuse verteilen und führen gerade im Bereich der Zellpole und Zellverbinder zu einer Reduktion von Luft- und Kriechstrecken, was die Lichtbogenbildung, weitere Kurzschlüsse und einen Batteriebrand fördert. Auch die Erhitzung der durchgehenden Zelle selbst sowie das heiße austretende Gas führen dazu, dass auch andere Zellen, vor allem in nächster Umgebung der durchgehenden Batteriezelle, sich stark erhitzen und infolgedessen ebenfalls thermisch durchgehen können. Dies führt letztendlich ohne Gegenmaßnahme zu einer thermischen Propagation über alle Zellen der Batterie hinweg, was letztendlich in einem Hochvoltbatteriebrand resultiert.

Die DE 10 2018 220 992 A1 beschreibt eine Sicherheitsvorrichtung für einen elektrochemischen Energiespeicher, der ein Berstventil und eine Kühlvorrichtung aufweist. Durch das Berstventil austretende heiße Gase sollen damit schnell heruntergekühlt werden können. Zur Kühlung kann dabei eine Kühlplatte vorgesehen sein, die gleichzeitig als Kühlplatte des Batteriepacks ausgeführt ist, so dass das austretende Gas entlang des Unterbodens des Fahrzeugs beziehungsweise entlang der Kühlplatte des Batteriepacks geführt werden kann.

Die DE 10 2021 105848 A1 beschreibt ein Energiespeichersystem mit einem Batteriemodul mit mehreren sekundären Batteriezellen und ein Gehäuse, das einen Modulstapel aufnimmt, wobei das Gehäuse eine erste Abdeckung umfasst, die so angeordnet ist, dass sie mindestens einer Seitenfläche des Modulstapels gegenüberliegt, und eine zweite Abdeckung aufweist, die mindestens einer weiteren Seitenfläche des Modulstapels gegenüberliegt, wobei ein Flammenkanal zwischen der ersten Abdeckung und dem Modulstapel ausgebildet ist und ein Kühlkanal zwischen der zweiten Abdeckung und dem Modulstapel ausgebildet ist.

Durch eine gezielte Gasableitung beziehungsweise Kühlung kann zwar die Gefahr, dass es beim finalen Gasaustritt aus der Austrittsöffnung des Kraftfahrzeugs zu einer Selbstentzündung des austretenden Gases kommt, reduziert werden, allerdings verhindert dies nicht ein thermisches Durchgehen weiterer Batteriezellen ausgehend von der initial thermisch durchgehenden Batteriezelle. Im Falle einer thermischen Propagation über alle Zellen hinweg tritt letztendlich so viel Gas aus der Batterie aus, dass sich eine Entzündung des Gases nach Austritt aus einer finalen Austrittsöffnung nicht mehr vermeiden lässt. Denn gerade wenn vielzählige Batteriezellen thermisch durchgehen, lassen sich die daraus resultierenden enormen heißen Gasmengen nicht mehr effizient kühlen. Zudem besteht die Gefahr eines Verstopfens des Entgasungswegs durch die vielzähligen sich ablagernden Partikel. Umso mehr erhitzen sich im Zuge der thermischen Propagation die Zellen innerhalb des Batteriegehäuses, insbesondere so stark, dass sich auch der Batteriebrand im Fahrzeug nicht mehr verhindern lässt. Ein weiteres Problem im Falle eines Thermal Runaways besteht zudem darin, dass bei Detektion eines solchen Fehlerfalls üblicherweise das Hochvoltbordnetz, welches im normalen Betriebsfall von der Batterie mit Energie versorgt wird, deaktiviert wird und die Batterie sofort vom restlichen Hochvoltbordnetz entkoppelt wird. Damit steht auch eine aktive Kühlung, gemäß welcher das Kühlmittelt durch einen Kältekreis aktiv gekühlt wird, für die Batterie nicht mehr zur Verfügung. Gemäß dem Stand der Technik wird daher versucht, durch spezielle Löscheinrichtungen eine thermische Propagation zu verhindern oder einen Batteriebrand zu löschen.

Beispielsweise beschreibt die DE 10 2016 200 368 A1 ein Batteriesystem mit einem Batteriemodul und einem Kühlmittelkreislaufsystem mit mindestens einem Kühlmittelbehälter und einer Kühlmittelleitung, die teilweise durch das Batteriemodul geführt ist, wobei die Kühlmittelleitung eine Notfallöffnung im Batteriemodul aufweist, die durch ein Betätigungselement verschlossen ist, welches als drucksensitives Betätigungselement ausgebildet ist, das bei einem Druck größer einem Schwellwert öffnet und die Notfallöffnung freigibt. Weiterhin weist der Kühlmittelbehälter einen Anschluss für einen Löschmittelschlauch oder eine Schnittstelle zur Befestigung eines Anschlusses für einen Löschmittelschlauch auf. Wird ein Löschmittelschlauch an den Anschluss angeschlossen und Löschmittel eingefüllt, führt dies zu einem erhöhten Druck im Kühlmittelkreislaufsystem, wodurch die Notfallöffnung im Batteriemodul geöffnet wird und das Kühlmittel in das Batteriemodul fließen kann.

Durch geeignete Löschmaßnahmen und Löschsysteme kann in den meisten Fällen nur der bereits entstandene Brand bekämpft werden, da diese Maßnahmen das Anschließen eines Löschschlauchs erfordern, der erst nach Eintreffen der Feuerwehr bereitgestellt werden kann.

Aufgabe der vorliegenden Erfindung ist es daher, ein Brandverhinderungssystem und ein Verfahren bereitzustellen, die es ermöglichen, einen aus einem thermischen Durchgehen einer Batteriezelle einer Batterie resultierenden Brand, insbesondere innerhalb Batterie als auch außerhalb der Batterie, zu verhindern.

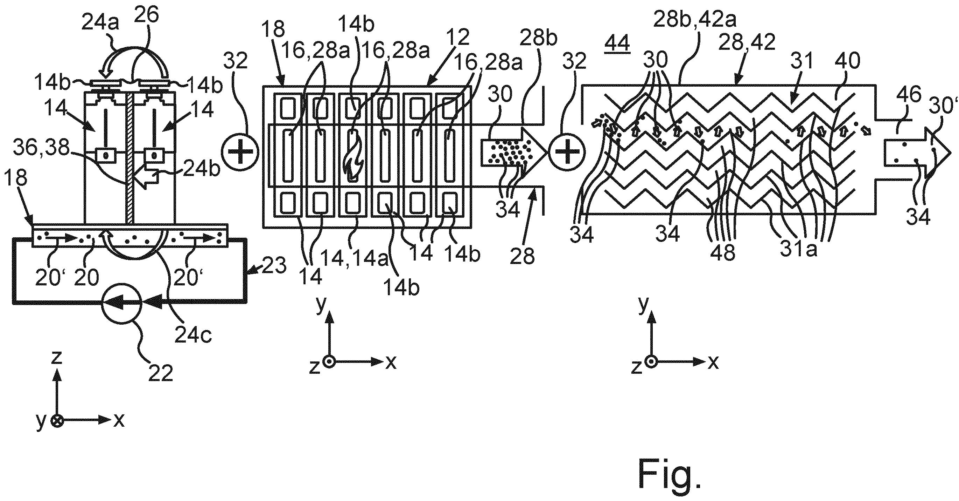

Diese Aufgabe wird gelöst durch ein Batteriebrandverhinderungssystem und ein Verfahren mit den Merkmalen gemäß den jeweiligen unabhängigen Patentansprüchen. Vorteilhafte Ausgestaltungen der Erfindung sind Gegenstand der abhängigen Patentansprüche, der Beschreibung sowie der Figur.

Ein erfindungsgemäßes Batteriebrandverhinderungssystem für eine mehrere Batteriezellen umfassende Batterie eines Kraftfahrzeugs zur Verhinderung eines aus einem thermischen Durchgehen einer ersten Batteriezelle der Batteriezellen der Batterie resultierenden Batteriebrands weist dabei einen an die Batteriezellen der Batterie anschließbaren Zellentgasungskanal auf, in welchen ein aus einer jeweiligen der Batteriezellen austretendes Gas einführbar und zu mindestens einer Austrittsöffnung des Zellentgasungskanals abführbar ist, eine Gasstrombeeinflussungsstruktur als Teil des Zellentgasungskanals, die dazu ausgelegt ist, den durch den Zellentgasungskanal strömenden Gasstrom in seinem Verlauf zu beeinflussen, der durch das aus der ersten Batteriezelle austretende Gas gebildet ist, und eine Kühleinrichtung zum Kühlen der thermisch durchgehenden ersten Batteriezelle, wobei die Kühleinrichtung derart eingerichtet ist, dass sie von einem Kühlmittel durchströmt wird, spätestens wenn die erste Batteriezelle thermisch durchgeht.

Die Erfindung beruht dabei auf der Erkenntnis, dass es mehrere Kernelemente, insbesondere drei Kernelemente, gibt, die erst im Gesamtverbund ihre Wirkung zeigen, um einen Batteriebrand, und insbesondere auch einen Brand außerhalb der Batterie, tatsächlich verhindern zu können und eine thermische Propagation stoppen zu können. Diese Kernelemente umfassen dabei eine kontrollierte Gasführung, was sich durch den an die Batteriezellen anschließbaren Zellentgasungskanal realisieren lässt, eine geeignete Gasbehandlung bei der Gasabführung, was sich durch die Gasstrombeeinflussungsstruktur realisieren lässt, und definierte Wärmeleitpfade, die ein schnelles Übergreifen der Wärme von Batteriezelle zu Batteriezelle eindämmen, was sich durch die Kühleinrichtung zur Kühlung zumindest der thermisch durchgehenden Zelle bewerkstelligen lässt. Durch die kontrollierte Gasabführung ist es möglich, zu verhindern, dass sich das Gas inklusive der darin enthaltenen, elektrisch leitfähigen Partikel unkontrolliert im Batteriegehäuse verteilt und weitere Kurzschlüsse im Bereich der Zellverbinder und Zellpole auslöst. Die Gasstrombeeinflussungsstruktur ermöglicht es vorteilhafterweise, durch Beeinflussung des Gasstroms in seinem Verlauf diesen während des Ausströmens abzukühlen und insbesondere auch Partikel herauszufiltern, wie dies später näher erläutert wird. Dadurch lässt sich ein Selbstentzünden dieses Gasstroms beim Austritt aus der finalen Austrittsöffnung verhindern. Dies wiederum beeinflusst die Wahrscheinlichkeit einer Brandentstehung innerhalb der Batterie in zweierlei Hinsicht. Zum einen überträgt ein abgekühlter Gasstrom nicht mehr so viel Wärme zurück auf die Batteriezellen, und zudem wird auch ein Hitzerückstau verhindert, der entstehen kann, wenn das aus der finalen Austrittsöffnung austretende Gas in Brand gerät. Ein solcher Hitzerückstau kann sich wiederum auf die Wärmeentwicklung im Batteriesystem innerhalb des Kraftfahrzeugs auswirken, was somit vorteilhafterweise verhindert werden kann. Besonders vorteilhaft sind diese Maßnahmen gerade in Kombination mit der Kühleinrichtung zum Kühlen der thermisch durchgehenden, ersten Batteriezelle, da sich nur hierdurch letztendlich in Kombination mit der beschriebenen Gasabführung das Ausbreiten einer thermischen Propagation verhindern lässt. Dadurch, dass das Gas geeignet abgeführt wird und auch die thermisch durchgehende Batteriezelle gekühlt wird und insbesondere die Wärme von der thermisch durchgehenden Batteriezelle und dem diese umgebenden Hotspotbereich abtransportiert wird, lässt es sich verhindern, dass sich benachbarte Zellen oder andere Zellen der Batterie so stark erhitzen, dass auch diese thermisch durchgehen. Dies wiederum wirkt sich auf die Effizienz der Gasabführung aus, da für den Fall, dass nur eine einzelne Zelle thermisch durchgeht, auch nur deren Gas geeignet behandelt, z.B. abgekühlt, gefiltert und abgeführt, werden muss, um bei Gasaustritt aus der finalen Austrittsöffnung eine Selbstentzündung dieses Gases zu verhindern. Die zur Gasbehandlung durch die Gasstrombeeinflussungsstruktur bereitgestellten Wirkungen und Maßnahmen sind damit umso effizienter, wenn sie nur auf eine geringe Gasmenge wirken. Somit lässt sich letztendlich eine Brandbildung nach Gasaustritt nur dann effizient verhindern, wenn auch eine Kühleinrichtung zum Kühlen der thermisch durchgehenden ersten Batteriezelle vorgesehen ist. Umgekehrt kann eine solche Kühleinrichtung auch nur dann effizient arbeiten, wenn zum Beispiel nur wenige Zellen, zum Beispiel nur die thermisch durchgehende erste Batteriezelle, zu kühlen ist. Weiterhin ließe sich eine thermische Propagation auch nicht verhindern, selbst wenn die thermisch durchgehende erste Batteriezelle gekühlt wird, wenn der aus dieser austretende Gasstrom nicht in geeigneter Weise abgeführt werden würde. Ohne geeignete Gasabführung käme es zu weiteren Kurzschlüssen durch die im Gas enthaltenen Partikel, was trotz Kühlung der thermisch durchgehenden Batteriezelle zu einem thermischen Durchgehen von weiteren Batteriezellen führen würde. Die Kühlwirkung würde sich dann auf mehrere Zellen aufteilen und wäre pro Zelle dadurch deutlich ineffizienter. Somit lässt es sich folglich lediglich durch das synergetische Zusammenwirken der genannten Komponenten erreichen, eine thermische Propagation ausgehend von einer thermisch durchgehenden Zelle zu stoppen und einen Batteriebrand, an dem alle Batteriezellen beteiligt sind, zu verhindern.

Unter einem System ist im Rahmen der vorliegenden Erfindung insbesondere eine Anordnung oder Vorrichtung beziehungsweise Einrichtung zu verstehen. Da zur Brandverhinderung genau genommen mehrere einzelne Einrichtungen oder Komponenten zusammenwirken, wird dies entsprechend vorliegend als System bezeichnet. Bei der Batterie kann es sich zum Beispiel um eine Hochvoltbatterie für ein Kraftfahrzeug, insbesondere ein Elektro- oder Hybridfahrzeug, handeln. Die von der Batterie umfassten Batteriezellen können optional auch zu Batteriemodulen zusammengefasst sein. Somit kann eine Batterie mehrere Batteriemodule mit jeweils mehreren Batteriezellen aufweisen. Die Batterie kann zum Beispiel zur Anordnung in einem Unterbodenbereich des Kraftfahrzeugs vorgesehen sein, zum Beispiel zirka im Bereich zwischen Vorder- und Hinterachse des Kraftfahrzeugs. Die Batteriezellen können zum Beispiel als Lithium-Ionen-Zellen ausgebildet sein. Der Zellentgasungskanal kann im Allgemeinen als strukturelle räumliche Begrenzung eines Strömungskanals definiert sein. Der Zellentgasungskanal kann zum Beispiel eine Kanalwandung aufweisen, die ein Inneres des Zellentgasungskanals von einer Umgebung separiert. Dass der Zellentgasungskanal an die Batteriezellen der Batterie anschließbar ist, soll dabei so verstanden werden, dass der Zellentgasungskanal derart an den Batteriezellen anordenbar oder mit diesen koppelbar ist, dass das aus einer jeweiligen dieser Batteriezellen austretende Gas in das Innere des Zellentgasungskanals eingeleitet werden kann. Die Kopplung ist dabei dergestalt, dass vorzugsweise der Großteil des aus einer jeweiligen Batteriezelle austretenden Gases in den Zellentgasungskanal eingeleitet werden kann. Vorzugsweise wird das gesamte oder nahezu gesamte aus der Batteriezelle ausströmende Gas in das Innere des Zellentgasungskanals eingeleitet. Die Zellpole der Batteriezellen sind dabei der Umgebung des Zellentgasungskanals zuzurechnen. Damit kann eine effiziente Separation des ausströmenden Gases von diesen Zellpolen gewährleistet werden. Die Batteriezellen können zum Beispiel in einem Batteriegehäuse angeordnet sein. Der Zellentgasungskanal kann zum Teil innerhalb dieses Batteriegehäuses verlaufen und aus diesem hinausführen, insbesondere bis zu einer finalen Austrittsöffnung aus dem Kraftfahrzeug. Diese kann also durch die Austrittsöffnung des Zellentgasungskanals bereitgestellt sein. Alternativ kann sich an die Austrittsöffnung des Zellentgasungskanals noch eine weitere Leitung bis zur finalen Austrittsöffnung anschließen. Die Gasstrombeeinflussungsstruktur ist dazu ausgelegt, den Gasstrom in seinem Verlauf zu beeinflussen. Dies kann eine Umlenkung des Gasstroms in seiner Strömungsrichtung umfassen sowie auch die Aufgliederung des Gasstroms in mehrere Teilströme. Sowohl durch die Umlenkung als auch Aufgliederung kann ein Abkühlungs- und Filterungseffekt erzielt werden. Vorzugsweise ist also die Gasstrombeeinflussungsstruktur dazu ausgelegt, den durch den Zellentgasungskanal strömenden Gasstrom abzukühlen und/oder hinsichtlich der im Gasstrom enthaltenen Partikel zu filtern.

Die Kühleinrichtung ist dazu ausgelegt, zumindest die thermisch durchgehende Batteriezelle spätestens, wenn die erste Batteriezelle thermisch durchgeht, zu kühlen, indem die Kühleinrichtung von einem Kühlmittel durchströmt wird. Die Kühleinrichtung kann dabei nicht nur der einzelnen, ersten Batteriezelle zugeordnet sein, sondern es kann sich auch um eine gemeinsame Kühleinrichtung für mehrere Batteriezellen handeln. Mit anderen Worten können mehrere Batteriezellen oder auch alle Batteriezellen der Batterie an diese Kühleinrichtung thermisch angeschlossen sein, zum Beispiel direkt an dieser Kühleinrichtung angeordnet sein oder über eine Wärmeleitmasse oder ein Wärmeleitelement an dieser mechanisch angebunden sein. Die Kühleinrichtung umfasst entsprechend von dem Kühlmittel durchströmbare Kühlkanäle. Damit ist die Kühleinrichtung nicht lediglich als passive Kühleinrichtung ausgebildet, sondern ermöglicht vorteilhafterweise eine Konvektion eines Kühlmittels, was deutlich effizienter hinsichtlich des Wärmeabtransports ist. Um ein Durchströmen der Kühleinrichtung mit Kühlmittel zu bewirken, ist eine Kühlmittelpumpe vorgesehen sein, die das Kühlmittel durch einen Kühlkreislauf pumpt, an welchen die Kühleinrichtung angeschlossen ist zum Beispiel über eine geeignete Ventileinrichtung und Ansteuerung einer solchen Ventileinrichtung. Dabei muss das Kühlmittel selbst nicht notwendigerweise auch gekühlt werden. Dies beruht dabei wiederum auf der Erkenntnis, dass, wenngleich im Falle eines thermischen Durchgehens einer Zelle zwar keine aktive Kühlung unter Einbindung eines Kältekreises und eines elektrischen Klimakompressors mehr möglich ist, aufgrund der Abschaltung des Hochvoltsystems und damit einhergehend auch der Abschaltung eines solchen Klimakompressors oder anderer Komponenten, die Kühlmittelpumpe im Kühlkreislauf, die aus dem Niedervoltnetz versorgt werden kann, dennoch weiterbetrieben werden kann beziehungsweise in den aktiven Zustand versetzt werden kann. Das im Kühlkreislauf, an welchem die Kühleinrichtung angeschlossen ist, zirkulierte Kühlmittel kann dann zwar nicht mehr aktiv heruntergekühlt werden, durch den Betrieb der Kühlmittelpumpe kann es jedoch erreicht werden, dass die lokal durch die thermisch durchgehende Batteriezelle an die Kühleinrichtung abgegebene Wärme von diesem Hotspotbereich abtransportiert werden kann und durch andere Komponenten des Kühlsystems oder des Kraftfahrzeugs aufgenommen werden kann, zum Beispiel durch das Kühlmittel selbst und andere mit dem Kühlkreislauf gekoppelte Komponenten. Dadurch kann die Wärmemenge, die von der thermisch durchgehenden Zelle auf benachbarte Zellen, insbesondere über die Kühleinrichtung, übertragen wird, deutlich reduziert werden. Durch das Aktivieren der Strömung des Kühlmittels durch die Kühleinrichtung, spätestens wenn die erste Batteriezelle thermisch durchgeht, kann erfindungsgemäß ein Umwälzen des Kühlmediums, das heißt des Kühlmittels, bewirkt werden, um die Wärme gezielt aus diesem Hotspotbereich abzutransportieren und zu verteilen. Dabei lässt sich also die Wärmekapazität des Kühlsystems als Ganzes nutzen, um die Wärme aufzunehmen, abzuleiten und dadurch eine thermische Propagation zu verhindern. Die Kühleinrichtung kann damit erfinfungsgemäß in einem zumindest semiaktiven Zustand betrieben werden, in welchem also das Kühlmittel zirkuliert wird, jedoch nicht notwendigerweise das Kühlmittel auch aktiv gekühlt werden muss. Optional ist es jedoch denkbar, zum Beispiel zusätzlich einen Lüfter, zum Beispiel einen Kühlerlüfter, im Bereich eines Wärmetauschers zu aktivieren, um hierdurch eine gewisse Kühlwirkung zur Kühlung des erwärmten Kühlmittels zu erreichen. Als Kühlmittel kommen zum Beispiel Wasser oder ein Wasser-Glykol-Gemisch infrage. Aber auch andere Flüssigkeiten sind denkbar, sowie prinzipiell auch ein gasförmiges Kühlmittel. Um die Kühleinrichtung entsprechend zu aktivieren, spätestens wenn die erste Batteriezelle thermisch durchgeht, kommen mehrere Möglichkeiten infrage. Beispielsweise kann eine Detektionseinrichtung vorgesehen sein, die ein solches thermisches Durchgehen oder bereits schon ein beginnendes thermisches Durchgehen, zum Beispiel anhand einer Temperatur der Batteriezelle, anhand erfasster elektrischer Größen der Batteriezelle, wie Spannung oder Strom, oder auch anhand eines Drucks in der Batterie beziehungsweise dem Batteriemodul mit der ersten Batteriezelle, eine Gaszusammensetzung oder ähnliches, detektiert. Besonders vorteilhaft ist es dabei, wenn die Kühleinrichtung die Kühlfunktion bereits aktiviert, sollte dies nicht bereits aktiv sein, wenn bereits der Beginn eines thermischen Durchgehens der ersten Batteriezelle erfasst wird, das heißt zum Beispiel bevor diese erste Batteriezelle ausgast. Dies lässt sich zum Beispiel einfach anhand der Temperatur der Batteriezelle feststellen. Somit kann eine rechtzeitige Aktivierung der Kühleinrichtung, oder zumindest einer Kühlmittelpumpe, bereitgestellt werden, um das Kühlmittel durch die Kühleinrichtung strömen zu lassen.

Bei einer weiteren vorteilhaften Ausgestaltung der Erfindung ist die Gasstrombeeinflussungsstruktur dazu ausgelegt, im Gasstrom mitgeführte Partikel zu filtern und/oder vor dem Erreichen der Austrittsöffnung abzuhalten. Eine solche filternde Wirkung kann auf verschiedenste Arten und Weisen erzielt werden. Die Filterung solcher Partikel hat den großen Vorteil, dass die Wahrscheinlichkeit der Selbstentzündung des Gases bei Austritt aus der finalen Austrittsöffnung deutlich reduziert werden kann. Diese Partikel stellen nämlich Zündquellen dar, sodass diese nach Möglichkeit vom Austritt aus der finalen Austrittsöffnung abgehalten werden sollten. Zur Partikelfilterung können zum Beispiel in den Gasabführpfad, welcher durch den Zellentgasungskanal bereitgestellt ist, entsprechende Filter integriert werden. Beispielsweise ist es auch denkbar, eine solche Partikelabscheidung und -filterung dadurch zu bewerkstelligen, indem der Gasabführpfad umgelenkt wird, insbesondere mehrfach umgelenkt wird, zum Beispiel Zickzack-förmig oder Schlangenförmig. Dies lässt sich beispielsweise wiederum dadurch realisieren, indem der Gasabführpfad selbst in seiner Erstreckungsrichtung entsprechend gewunden oder gekrümmt verlaufend ausgebildet ist. Bevorzugt ist es jedoch, wenn entsprechende Umlenkstrukturen im Inneren des Gasabführkanals integriert sind. Beispielsweise können in diese Leitbleche integriert sein, die eine solche Gasstromlenkung bewirken. Dazu können zum Beispiel in einer Kammer des Gasabführkanals mehrere parallel zueinander angeordnete und Zickzack-förmig verlaufende oder wellenförmig verlaufende Bleche vorgesehen sein, die den Gasabführpfad in mehrere, insbesondere vielzählige, parallel zueinander verlaufende Teilpfade separieren, welche insbesondere in Hauptverlaufsrichtung bezüglich zumindest eine Richtung senkrecht zur Hauptverlaufsrichtung alternierend variieren, zum Beispiel periodisch beziehungsweise wellenförmig oder Zickzack-förmig. Denkbar ist es auch, mehrere Lochbleche hintereinander in Hauptverlaufsrichtung anzuordnen, wobei ein jeweiliges Lochblech vielzählige kleine Löcher aufweist. Die Löcher können dabei in Hauptverlaufsrichtung von Lochblech zu Lochblech in ihrem Durchmesser reduziert werden. Dies führt zu einer graduellen Partikelabscheidung. Gleichzeitig führen diese Maßnahmen nicht nur zur Partikelabscheidung, sondern auch dazu, dass der Gasstrom gebremst wird und dadurch ebenfalls abkühlt und beispielsweise auch Energie an die beschriebenen Strukturen abgibt.

Entsprechend stellt es eine weitere sehr vorteilhafte Ausgestaltung der Erfindung dar, wenn die Gasstrombeeinflussungsstruktur dazu ausgelegt ist, eine Strömungsgeschwindigkeit des Gasstroms zu verringern, insbesondere durch Umlenkung einer Strömungsrichtung des im Zellentgasungskanal strömenden Gasstroms. Dies lässt sich zum Beispiel ebenfalls durch die oben bereits beschriebenen Maßnahmen zur Partikelfilterung umsetzen. Beispielsweise sind auch die parallel zueinander angeordneten, schlangenförmig bzw. wellig verlaufenden Bleche dazu geeignet, eine solche Umlenkung der Strömungsrichtung, und zwar in mehrfacher Abfolge, zu bewerkstelligen, wodurch eben nicht nur eine Partikelabscheidung, sondern entsprechend auch eine Abkühlung des Gasstroms erzielt werden kann. Ebenso kann durch die beschriebenen Lochbleche eine solche Umlenkung der Strömungsrichtung erreicht werden, insbesondere wenn die Lochbleche so zueinander ausgerichtet sind, dass die Löcher in Hauptströmungsrichtung betrachtet nicht zueinander fluchten, sondern zumindest leicht oder vollständig versetzt zueinander angeordnet sind. Eine Umlenkung des Gasstroms kann auch durch labyrinthartige Ausformung von Strukturen innerhalb des Zellentgasungskanals umgesetzt sein. Die beschriebenen Varianten können auch miteinander kombiniert werden, zum Beispiel indem innerhalb des Zellentgasungskanals wiederum weitere Unterkanäle gebildet sind, die zum Beispiel bereichsweise oder partiell gasdurchlässige Kanalwände aufweisen. Diese erfüllen dann eine ähnliche Wirkung wie die Lochbleche und ermöglichen beispielsweise eine möglichst homogene Verteilung eines in eine Kammer einströmenden Gases auf ein durch die Kammer des Zellentgasungskanals bereitgestelltes maximales Volumen, wie dies später noch näher erläutert wird.

Bei einer weiteren vorteilhaften Ausgestaltung der Erfindung weist der Zellentgasungskanal eine Wandung auf, die ein Inneres des Zellentgasungskanals von einer Umgebung separiert, wobei die Gasstrombeeinflussungsstruktur in dem Inneren des Zellentgasungskanals angeordnet ist. Durch eine im Inneren des Zellentgasungskanals angeordnete Gasstrombeeinflussungsstruktur lässt sich eine deutlich effizientere Partikelabscheidung und Gasstromabkühlung erzielen, als wenn beispielsweise eine Gasumlenkung durch geometrische Ausbildung und Führung des Zellentgasungskanals selbst bewerkstelligt werden soll. Durch solche in das Innere des Zellentgasungskanals integrierte Gasstrombeeinflussungsstrukturen lässt sich die Kollisionsfläche, mit welcher das Gas beim Durchströmen des Zellentgasungskanals kollidiert, vergrößern, was eine effizientere Abkühlung und Partikelabscheidung erlaubt.

Sehr vorteilhaft ist es dabei auch, wenn der Zellentgasungskanal beispielsweise eine Gasabführkammer umfasst, welche auch einfach als Kammer bezeichnet werden kann und in welcher als Gasstrombeeinflussungsstruktur eine Gasverteilungsstruktur angeordnet ist, welche das durch mindestens eine Eintrittsöffnung der Kammer in diese eintretende Gas im Innenraum der Kammer verteilt, bevor dieses durch zumindest eine Austrittsöffnung der Kammer diese wieder verlässt. Eine solche Kammer kann zum Beispiel als Raum direkt unterhalb und/oder oberhalb der Batterie bereitgestellt sein, zum Beispiel zwischen einem Batterieboden und einem Unterfahrschutz des Kraftfahrzeugs. Damit erstreckt sich diese Kammer beispielsweise in einer Länge und einer Breite zum Beispiel über einen Großteil der Batterie, insbesondere auch über die gesamte Batterie. Damit können zumindest in zwei Dimensionen sehr große Abmessungen einer solchen Kammer bereitgestellt werden. Das aus einer Zelle austretende Gas kann beispielsweise direkt nach oben oder unten in diese Kammer eingeleitet werden. Pro Batteriezelle oder Batteriemodul der Batterie kann dabei eine jeweilige Eintrittsöffnung in der Kammer vorgesehen sein. Mit anderen Worten kann die Kammer auch mehrere Eintrittsöffnungen umfassen und nicht nur eine einzelne.

Dabei ist die Gasabführkammer zum Beispiel derart ausgestaltet, dass ein aus der mindestens einen ersten Batteriezelle austretendes Gas, welches durch die mindestens eine Eintrittsöffnung in die Gasabführkammer eingeleitet wird, durch die Gasabführkammer bis zur mindestens einen Austrittsöffnung durchleitbar ist und aus der mindestens einen Austrittsöffnung ausführbar ist. Dabei weist die Gasabführkammer die im Innenraum der Gasabführkammer angeordnete Gasverteilungsstruktur auf, die dazu ausgelegt ist, ein über die mindestens eine erste Eintrittsöffnung in die Gasabführkammer eingeführtes Gas vor dem Austritt aus der zumindest einen Austrittsöffnung im Innenraum der Gasabführkammer zu verteilen.

Gemäß einer weiteren vorteilhaften Ausgestaltung der Erfindung weist die Gasverteilungsstruktur mindestens einen in einem ersten Bereich des Innenraums angeordneten Gasabführkanal auf, der mindestens eine partiell gasdurchlässige Kanalwand aufweist, die den ersten Bereich vom zweiten Bereich des Innenraums zumindest zum Teil separiert, wobei die mindestens eine erste Eintrittsöffnung in den zweiten Bereich des Innenraums mündet und wobei die mindestens eine Austrittsöffnung in ein Inneres der Gasabführkammer im ersten Bereich mündet, wobei die mindestens eine Kanalwand derart ausgebildet ist, dass eine Gasdurchlässigkeit der Kanalwand in Abhängigkeit von einer Entfernung von der mindestens einen Austrittsöffnung der Kammer variiert, zum Beispiel mit zunehmendem Abstand zunimmt.

Bei einer weiteren vorteilhaften Ausgestaltung der Erfindung weist die Gasverteilungsstruktur mehrere Gasabführkanäle umfassend den mindestens einen Gasabführkanal auf, wobei die Gasabführkanäle zueinander beabstandet angeordnet sind, wobei in jeden Gasabführkanal eine Austrittsöffnung von mehreren Austrittsöffnungen der Gasabführkammer mündet, und wobei ein jeweiliger Gasabführkanal zwei gegenüberliegende gasdurchlässige Kanalwände aufweist.

Denkbar ist es zudem auch, dass die beschriebenen Gasstrombeeinflussungsstrukturen ebenfalls von einem Kühlmittel durchströmbar ausgebildet sind und von einem solchen Kühlmittel durchströmt werden, zumindest spätestens, wenn Gas aus der ersten Batteriezelle austritt. Dadurch kann eine zusätzliche Gaskühlung bereitgestellt werden.

Des Weiteren betrifft die Erfindung auch eine Batterieanordnung mit einem erfindungsgemäßen Batteriebrandverhinderungssystem oder einer seiner Ausgestaltungen.

Dabei ist es bevorzugt, dass die Batterieanordnung die Batterie mit den mehreren Batteriezellen umfasst. Dabei kann weiterhin eine jeweilige der Batteriezellen eine freigebbare Entgasungsöffnung aufweisen, die mit dem Zellentgasungskanal gekoppelt ist.

Gemäß einer vorteilhaften Ausgestaltung der Erfindung umfasst die Batterieanordnung also die Batterie mit den mehreren Batteriezellen, wobei eine jeweilige der Batteriezellen eine freigebbare Entgasungsöffnung aufweist, die an eine zugeordnete, zumindest freigebbare Eintrittsöffnung des Zellentgasungskanals mittels einer Dichtung abgedichtet eingeschlossen ist, die dazu ausgelegt ist, ein aus der Entgasungsöffnung austretendes Gas am Ausdringen in eine Umgebung des Zellentgasungskanals zumindest zum Teil zu hindern. Durch eine solche abgedichtete Kopplung zwischen Batteriezelle und Zellentgasungskanal kann vorteilhafterweise das Risiko, dass Gas durch den Zwischenraum zwischen Batteriezelle und Zellentgasungskanal in die Umgebung dringen kann, minimiert werden. In der Umgebung befinden sich dabei die Zellpole der Batteriezellen. Dadurch kann das Gas auf besonders effiziente Weise von diesen Zellpolen und den daran angeschlossenen Zellverbindern ferngehalten werden. Der Zellentgasungskanal kann zum Beispiel als Teil seiner Kanalwandung eine der Batteriezellenanordnung zugewandte Kanalwand aufweisen, in welcher freigebbare Kanalöffnungen vorgesehen sind, die mit den zugeordneten Entgasungsöffnungen der Batteriezellen gekoppelt sind beziehungsweise über die Dichtung an diese angeschlossen sind. Diese zumindest freigebbaren Öffnungen in der Kanalwand können als permanente Öffnungen bereitgestellt sein oder aber auch als Öffnungen, die erst im Entgasungsfall freigegeben werden, und die zum Beispiel ebenfalls als Berstmembranen ausgestaltet sein können. Die Dichtungen können dabei beispielsweise als Hochtemperaturdichtungen ausgeführt sein. Die dichtende Anbindung kann aber auch als metallischer Kragen oder Ring oder ähnliches ausgeführt sein.

Bei einer weiteren sehr vorteilhaften Ausgestaltung der Erfindung ist die Kühleinrichtung mit mindestens einer Seite einer jeweiligen der Batteriezellen verbunden und/oder über eine elektrische Isolierung an Zellverbindern angeordnet, mittels welchen die Batteriezellen elektrisch verschaltet sind. Die Batteriezellen können in einer bestimmten Anordnung zueinander angeordnet sein. Sind die Batteriezellen zum Beispiel in Form prismatischer Batteriezellen bereitgestellt, können diese zum Beispiel in Form eines Zellstapels mit mehreren in Stapelrichtung nebeneinander angeordneten Batteriezellen angeordnet sein. Sind die Zellen zum Beispiel als Rundzellen ausgebildet, so können diese auf einem Träger, der gleichzeitig als die Kühleinrichtung ausgebildet ist, angeordnet sein, insbesondere mit einer ihrer Stirnseite dem Träger zugewandt, wobei die Batteriezellen weiterhin in einer matrixförmigen Anordnung auf dem Träger angeordnet sein können, oder auch mit zueinander versetzten Reihen, sodass jede Rundzelle von sechs weiteren Rundzellen als nächste Nachbarn umgeben ist, sofern es sich nicht um eine Randzelle handelt. Die Zellen können zum Beispiel eine erste Seite aufweisen, die zum Beispiel im Falle von Rundzellen eine Stirnseite darstellen kann, an welcher die Zellpole oder zumindest einer der Zellpole angeordnet ist. Mit erster Seite der Batteriezelle wird folglich eine Seite bezeichnet, an welcher zumindest ein Zellpol der Batteriezelle angeordnet ist. Die Kühleinrichtung ist somit vorzugsweise an einer von der ersten Seite verschiedenen Seite der Batteriezelle angebunden. Zusätzlich oder alternativ kann die Kühleinrichtung auch über eine elektrische Isolierung mit den Zellpolen selbst verbunden sein beziehungsweise mit den Zellverbindern, die die Zellpole untereinander elektrisch kontaktieren. Die Kühleinrichtung kann folglich auch mehrere Kühleinheiten aufweisen, zum Beispiel eine, die an einer von der ersten verschiedenen Seite der Batteriezellen angebunden ist und eine, die die Zellverbinder beziehungsweise Zellpole kühlt. Auch können die Zellen als Pouchzellen ausgebildet sein und die Kühlung an einer geeigneten Seite dieser Pouchzellen angebunden sein. Dadurch gibt es vielzählige verschiedene Ausgestaltungen, die zur Kühlung der Batteriezellen genutzt werden können.

Besonders vorteilhaft ist es dabei zudem auch, wenn zwischen je zwei benachbarten angeordneten Batteriezellen der mehreren Batteriezellen ein thermisches Isolationselement angeordnet ist. Ein solches thermisches Isolationselement kann zum Beispiel durch eine Keramikplatte oder Glimmerplatte, einer isolierenden Vergussmasse oder ähnliches bereitgestellt sein. Das thermische Isolationselement ist vorzugsweise auch elektrisch isolierend ausgebildet. Dadurch kann die Wärmeausbreitung von der betroffenen thermisch durchgehenden ersten Zelle auf andere benachbarte Zellen verlangsamt werden. Durch die zusätzliche Kühlung sowie durch die beschriebene Gasabführung kann gleichzeitig erreicht werden, dass sich so wenig Wärme auf benachbarte Zellen überträgt, dass ein thermisches Durchgehen dieser benachbarten Zellen verhindert werden kann.

Des Weiteren betrifft die Erfindung auch ein Kraftfahrzeug mit einer erfindungsgemäßen Batterieanordnung oder einer ihrer Ausgestaltungen.

Das erfindungsgemäße Kraftfahrzeug ist bevorzugt als Kraftwagen, insbesondere als Personenkraftwagen oder Lastkraftwagen, oder als Personenbus oder Motorrad ausgestaltet.

Des Weiteren betrifft die Erfindung auch ein Verfahren zur Verhinderung eines aus einem thermischen Durchgehen einer ersten Batteriezelle von mehreren Batteriezellen einer Batterie resultierenden Batteriebrands, wobei in einen an die Batteriezellen der Batterie angeschlossenen Zellentgasungskanal ein aus der ersten Batteriezelle austretendes Gas eingeführt und zur mindestens einen Austrittsöffnung des Zellentgasungskanals abgeführt wird, der Gasstrom, der durch das aus der ersten Batteriezelle austretende Gas gebildet ist, durch eine Gasstrombeeinflussungsstruktur als Teil des Zellentgasungskanals in seinem Verlauf beeinflusst wird, und die thermisch durchgehende erste Batteriezelle durch eine Kühleinrichtung gekühlt wird, die von einem Kühlmittel durchströmt wird.

Die für das erfindungsgemäße Batteriebrandverhinderungssystem und seine Ausgestaltungen sowie die für die erfindungsgemäße Batterieanordnung und ihre Ausgestaltungen genannten Vorteile gelten in gleicher Weise für das erfindungsgemäße Verfahren.

Zu der Erfindung gehören auch Weiterbildungen des erfindungsgemäßen Verfahrens, die Merkmale aufweisen, wie sie bereits im Zusammenhang mit den Weiterbildungen des erfindungsgemäßen Brandverhinderungssystems und der erfindungsgemäßen Batterieanordnung beschrieben worden sind. Aus diesem Grund sind die entsprechenden Weiterbildungen des erfindungsgemäßen Verfahrens hier nicht noch einmal beschrieben.

Die Erfindung umfasst auch die Kombinationen der Merkmale der beschriebenen Ausführungsformen. Die Erfindung umfasst also auch Realisierungen, die jeweils eine Kombination der Merkmale mehrerer der beschriebenen Ausführungsformen aufweisen, sofern die Ausführungsformen nicht als sich gegenseitig ausschließend beschrieben wurden.

Im Folgenden sind Ausführungsbeispiele der Erfindung beschrieben. Bei den im Folgenden erläuterten Ausführungsbeispielen handelt es sich um bevorzugte Ausführungsformen der Erfindung. Bei den Ausführungsbeispielen stellen die beschriebenen Komponenten der Ausführungsformen jeweils einzelne, unabhängig voneinander zu betrachtende Merkmale der Erfindung dar, welche die Erfindung jeweils auch unabhängig voneinander weiterbilden. Daher soll die Offenbarung auch andere als die dargestellten Kombinationen der Merkmale der Ausführungsformen umfassen. Des Weiteren sind die beschriebenen Ausführungsformen auch durch weitere der bereits beschriebenen Merkmale der Erfindung ergänzbar.

Dabei zeigt die einzige Fig. eine schematische Darstellung der Hauptkomponenten eines Brandverhinderungssystems 10 gemäß der Erfindung. Das Brandverhinderungssystem 10 dient dabei der Brandverhinderung eines Batteriebrands einer Batterie 12, die mehrere Batteriezellen 14 umfasst, welche aus dem thermischen Durchgehen einer ersten Batteriezelle 14a der mehreren Batteriezellen 14 resultiert. Eine solche Batterie 12 ist beispielsweise in der mittleren Darstellung in der Fig. illustriert. Eine jeweilige Batteriezelle 14 kann dabei zudem eine freigebbare Zellentgasungsöffnung 16 aufweisen, welche bei Überdruck innerhalb der betreffenden Batteriezelle 14 öffnet, um ein kontrolliertes Ausgasen der betreffenden Batteriezelle 14, wie in diesem Beispiel der thermisch durchgehenden Batteriezelle 14a, zu ermöglichen. Diese Batterie 12 kann zum Beispiel als Hochvoltbatterie für ein Kraftfahrzeug, insbesondere ein Elektro- oder Hybridfahrzeug, ausgebildet sein. In der linken Darstellung in der Fig. sind nochmals exemplarisch zwei solcher Batteriezellen 14 dargestellt. Diese sind auf einem Träger 18 angeordnet, der gleichzeitig als Kühlboden ausgebildet ist und entsprechend von einem Kühlmittel 20 durchströmbar ist. Um dabei das Kühlmittel 20 durch diesen Träger 18 strömen zu lassen, der damit einhergehend gleichzeitig eine Kühleinrichtung 18 darstellt, wird eine Kühlmittelpumpe 22 verwendet. Der Kühlkreislauf ist vorliegend mit 23 bezeichnet. Durch diesen wird das Kühlmittel 20 durch Pumpen zirkuliert und die Kühleinrichtung 18 ist an diesen Kühlkreislauf 23 angeschlossen. Dabei können alle Batteriezellen 14 auf einem gemeinsamen solchen als Kühleinrichtung 18 ausgebildeten Träger 18 angeordnet sein oder es können für bestimmte Zellgruppen mit jeweils mehreren Batteriezellen 14 separate solche Kühleinrichtungen 18 vorgesehen sein.

Grundsätzlich gibt es zwischen zwei benachbarten angeordneten Batteriezellen 14, wie dies links in der Fig. dargestellt ist, mehrere thermische Kopplungspfade 24a, 24b, 24c. Zum einen sind die Zellpole 14b einer jeweiligen Batteriezelle 14 mit denen einer benachbarten Batteriezelle 14 über elektrisch leitende Zellverbinder 26 miteinander gekoppelt beziehungsweise elektrisch leitend verbunden. Über diesen Zellverbinder 26 ist ein erster Wärmeübertragungspfad 24a bereitgestellt. Entsteht im Falle eines thermischen Events einer Batteriezelle 14 sehr viel Wärme in einer solchen Batteriezelle 14, so überträgt sich diese ohne weitere Gegenmaßnahme über einen solchen Zellverbinder 26 sehr schnell auf die benachbart angeordnete Batteriezelle 14. Auch die Kühleinrichtung 18, die zum Beispiel in Form einer metallischen mit Strömungskanälen versehenen Platte bereitgestellt werden kann, koppelt benachbarte Zellen 14 thermisch sehr gut, wenn diese Platte 18 gerade nicht vom Kühlmittel 20 durchströmt wird. Auch hierdurch ist also zumindest im inaktiven Zustand der Kühleinrichtung 18 ein sehr gut thermisch leitender Wärmeübertragungspfad 24c bereitgestellt. Ein weiterer Wärmeübertragungspfad 24b ist zwischen den einander zugewandten Zellflächen zwischen den Batteriezellen 14 bereitgestellt.

Kommt es in einer herkömmlichen Batterie ohne Gegenmaßnahme zu einem thermischen Event einer Batteriezelle, so erhitzt sich diese Batteriezelle im Zuge ihres thermischen Durchgehens sehr stark und letztendlich tritt Gas aus dieser Batteriezelle aus. Gelangen vor allem die in diesem Gasstrom enthaltenen elektrisch leitfähigen Partikel in den Bereich der Pole der Batteriezellen, so können diese zu zusätzlichen Kurzschlüssen führen, was wiederum Auslöser für das thermische Durchgehen weiterer Batteriezellen sein kann. Auch über die beschriebenen thermischen Pfade zwischen den Zellen kann Wärme auf andere Zellen übertragen werden. Erhitzen sich diese ebenfalls sehr stark, so gehen auch diese thermisch durch.

Durch die Erfindung und ihre Ausführungsformen ist es nun vorteilhafterweise möglich, einen aus einem thermischen Durchgehen einer Batteriezelle 14a resultierenden Gesamtbatteriebrand durch das Batteriebrandverhinderungssystem 10 zu verhindern. Wie bereits erwähnt, umfasst dieses mehrere Hauptkomponenten. Diese sind zum einen die bereits erwähnte Kühleinrichtung 18, ein an die Batteriezellen 14 anschließbarer Zellentgasungskanal 28 zur gezielten Gasableitung des aus der thermisch durchgehenden Zelle 14a austretenden Gasstroms 30, sowie eine Gasstrombeeinflussungsstruktur 32 als Teil des Zellentgasungskanals 28. Dabei lässt sich die brandverhindernde Wirkung des Brandverhinderungssystems 10 an sich allein durch die Kombination dieser Hauptkomponenten bewerkstelligen. Die Kombination soll in der Fig. durch die Additionssymbole 32 veranschaulicht werden. Dies beruht auf der Erkenntnis, dass eine effiziente Gasabführung nur dann möglich ist, wenn nicht alle Batteriezellen 14 der Batterie 12 thermisch durchgehen. Die gezielte Gasabführung ist wiederum erforderlich, um weitere Kurzschlüsse weiterer noch intakter Zellen 14 zu verhindern, um eine thermische Propagation zu vermeiden. Auch muss sich eine möglichst gute thermische Entkopplung zwischen den Zellen 14 bereitstellen lassen, was durch die Kühleinrichtung 18 ermöglicht wird. Auch dies ist nur dann möglich, wenn nicht zu viele Batteriezellen 14 thermisch durchgehen, da ansonsten keine effiziente Kühlung mehr bereitgestellt werden kann. Entsprechend muss für eine geeignete Gasabführung gesorgt werden, da andernfalls die im Gasstrom 30 enthaltenen Partikel 34 Kurzschlüsse und Lichtbogen innerhalb der Batterie 12 verursachen können, die eine thermische Propagation trotz Kühlung begünstigt. Die Gasstrombeeinflussungsstruktur 31 sorgt zudem für eine ausreichende Partikelabscheidung und Gasabkühlung des Gasstroms 30, sodass der letztendlich austretende Gasstrom 30' deutlich weniger Partikel 34 oder gar keine Partikel 34 mehr umfasst und deutlich kühler ist als der aus der betreffenden Zelle 14a austretende Gasstrom 30. Dadurch lässt sich auch eine Brandentstehung außerhalb der Batterie 12, insbesondere bei Austritt aus einer finalen Austrittsöffnung, vermeiden. Im Folgenden soll nun die Funktionsweise dieser erläuterten Hauptkomponenten näher beschrieben werden.

Die Kühleinrichtung 18, wie diese in der Fig. links dargestellt ist, wird erfindungsgemäß, spätestens wenn eine Batteriezelle 14a thermisch durchgeht, von einem Kühlmittel 20 durchströmt. Das Durchströmen wird durch die Pumpe 22 wie beschrieben erreicht. Weiterhin ist dieses Durchströmen der Kühleinrichtung 18 durch die Pfeile 20' illustriert. Dabei muss nicht notwendigerweise auch eine aktive Kühlung des Kühlmittels 20 einhergehen. Die Kühleinrichtung 18 kann somit als inaktive Kühlung fungieren. Dies beruht wiederum auf der Erkenntnis, dass im Falle eines detektierten Defekts der Batterie 12, wie zum Beispiel das thermische Durchgehen einer Batteriezelle 14a, die Batterie 12 vom restlichen Hochvoltbordnetz getrennt wird, wodurch also das Hochvoltbordnetz abgeschaltet wird. Damit können diverse Komponenten, die üblicherweise zur Kühlung des Kühlmittels 20 verwendet werden, wie der Betrieb eines elektrischen Klimakompressors in einem Kältemittelkreis, nicht mehr verwendet werden. Durch die Pumpe 22, die von einem Niedervoltbordnetz des Kraftfahrzeugs versorgt werden kann, lässt sich das Kühlmittel 20 innerhalb des Kühlkreislaufs 23 erfindungsgemäß umwälzen und somit effizient die in der betroffenen Zelle 14a entstehende Wärme wegtransportieren. Eine Wärmeübertragung über den mit 24c bezeichneten thermischen Pfad kann somit in ihrem Ausmaß enorm reduziert werden. Wenngleich auch hier nicht dargestellt, so kann eine solche Kühleinrichtung 18 alternativ oder zusätzlich auch an die Zellpole 14b beziehungsweise die Zellverbinder 26, zum Beispiel über eine elektrische Isolierung, angebunden sein. Damit lässt sich in gleicher Weise auch eine Wärmeübertragung über den mit 24a bezeichneten thermischen Pfad verringern. Grundsätzlich ist aber auch eine Kühlung an einer der Seiten der Zellen 14 ausreichend, da zum Beispiel durch die hier dargestellte unterseitige Kühlung 18 ausreichend Wärme abtransportiert werden kann, sodass letztendlich auch über den oberen thermischen Pfad 24a kaum noch Wärme übertragen werden kann. Gleiches gilt auch für den Pfad 24b zwischen den Zellen 14. Um zusätzlich noch die Wärmeübertragung über diesen mittleren thermischen Pfad 24b zu mindern, ist es zudem bevorzugt, dass im Zwischenraum 36 zwischen den Zellen ein thermisches Isolationselement 38 angeordnet ist. Dadurch kann die Wärmeübertragung zwischen den Zellen 14 in diesem Bereich zusätzlich reduziert werden. Hierdurch lassen sich also definierte Wärmeleitpfade schaffen, und zwar in Richtung Kühlstruktur 18, während gleichzeitig die Pfade zwischen den Zellen 14 eliminiert oder reduziert werden.

Weiterhin kann das aus der betroffenen Zelle 14a austretende Gas 30 in einen Zellentgasungskanal 28, wie bereits erwähnt, eingeleitet werden, wie in der mittleren Darstellung in der Fig. illustriert. Dadurch kann eine kontrollierte Gasführung erreicht werden und das austretende Gas 30 von den Zellpolen 14b separiert gehalten werden. Dadurch lassen sich Lichtbogenbildungen und weitere Kurzschlüsse vermeiden. Zu diesem Zweck kann der Zellentgasungskanal 28 an die jeweiligen zum Beispiel als Berstmembranöffnungen ausgestalteten Entgasungsöffnungen 16 der Zellen 14 mit einer Dichtung angebunden beziehungsweise angeschlossen sein. Zu diesem Zweck kann der Zellentgasungskanal 28 beispielsweise zu den jeweiligen Entgasungsöffnungen 16 der Zellen 14 korrespondierende Eintrittsöffnungen 28a aufweisen. In der Fig. ist in der mittleren Darstellung die Batterie 12 in einer Draufsicht auf die Entgasungsöffnungen 16 und die in z-Richtung darüber liegenden Eintrittsöffnungen 28a dargestellt. Auch diese Eintrittsöffnungen 28a können zum Beispiel als permanente Öffnungen oder als Berstmembranen ausgebildet sein.

Aber auch die Temperatur dieses ausströmenden, heißen Gases 30 kann sich ohne Gegenmaßnahme wiederum rückwirkend auf die Temperatur der Batteriezellen 14 auswirken. Deshalb ist es vorteilhaft, dass zusätzlich die Gasstrombeeinflussungsstruktur 31 als Teil des Zellentgasungskanals 28 vorgesehen ist. Diese erlaubt eine zusätzliche Förderung der Gasabkühlung und Partikelabscheidung. Eine solche Gasstrombeeinflussungsstruktur 31 kann verschiedene Ausprägungen annehmen. Grundsätzlich ist es bevorzugt, dass diese in ein Inneres 40 des Zellentgasungskanals 28 integriert ist. Der Zellentgasungskanal 28 kann beispielsweise als Abschnitt auch eine Kammer 42 umfassen, in deren Inneres 40 diese Gasstrombeeinflussungsstruktur 31 integriert ist. Um dieses Innere 40 von einer Umgebung 44 zu separieren, weist der Zellentgasungskanal 28 beziehungsweise die Kammer 42 eine korrespondierende Wandung 28b, 42a auf. Die Wandung 42a der Kammer 42 ist dabei Teil der Wandung 28b des gesamten Zellentgasungskanals 28. Das Gas 30 ist dabei durch diese Kammer 42 bis zu einer Austrittsöffnung 46 der Kammer 42 beziehungsweise des Zellentgasungskanals 28 leitbar. Diese kann zu einer finalen Austrittsöffnung aus dem Kraftfahrzeug, in welchem das Batteriebrandverhinderungssystem Anwendung findet, korrespondieren oder es kann sich an dieser Austrittsöffnung 46 noch eine weitere Leitung zur Gasabführung bis zu einer finalen Austrittsöffnung anschließen. Eine solche Kammer 42 kann prinzipiell auch direkt oberhalb oder unterhalb der Batterie 12 angeordnet sein, sodass beispielsweise die beschriebenen Eintrittsöffnungen 28 direkt in diese Kammer 42 münden. Durch die Gasstrombeeinflussungsstruktur 31 wird nun vorteilhafterweise eine Gasabkühlung des Gasstroms 30 sowie eine Partikelabscheidung der Partikel 34 ermöglicht. In diesem Beispiel umfasst die Struktur 31 vielzählige Strukturelemente 31a, die zum Beispiel als Zickzack-förmig verlaufende beziehungsweise wellenförmig verlaufende Bleche ausgebildet sein können, die somit in ihren Zwischenräumen vielzählige ebenfalls in x-Richtung wellenförmig beziehungsweise Zickzack-förmig verlaufende Teilpfade 48 bereitstellen. Durch diese Zickzack-förmige beziehungsweise wellenförmige Struktur wird der Gasstrom 30 in einem jeweiligen Teilpfad 48 mehrfach in und entgegen y-Richtung umgelenkt. Dadurch werden Partikel 34 abgeschieden und die Gasströmung verlangsamt sich. Zudem wird thermische Energie an die Strukturelemente 31a abgegeben. Auch diese können zum Beispiel zusätzlich von einem Kühlmittel durchströmbar ausgebildet sein und während der Gasabführung durchströmt werden, um eine zusätzliche Gaskühlung bereitzustellen.

Die Gasstrombeeinflussungsstruktur 31 kann aber auch noch vielzählige, vorliegend nicht dargestellte, andere Ausprägungsformen annehmen. Beispielsweise kann diese als eines oder mehrere in x-Richtung hintereinander angeordnete Lochbleche bereitgestellt sein. Die Lochbleche sind dabei vorzugsweise zur x-Richtung, die zu einer Hauptströmungsrichtung beziehungsweise zumindest lokalen Hauptströmungsrichtung, korrespondiert, ausgerichtet und weisen jeweils mehrere Löcher auf. Diese können Durchmesser im Bereich zwischen einem Millimeter und zehn Millimeter aufweisen. Dadurch kann eine Filterwirkung zur Filterung und Abscheidung der Partikel 34 bereitgestellt werden. Durch eine versetzte Anordnung der Löcher zueinander der jeweiligen Lochplatten kann zudem eine Mehrfachumlenkung und Aufteilung des Gasstroms 30 erreicht werden, was zu einer geförderten Partikelabscheidung und Abbremsung des Gasstroms führt.

Insgesamt zeigen die Beispiele, wie ein Sicherheitskonzept eines NTP(No Thermal Propagation)-Hochvoltbatteriesystems bereitgestellt werden kann, mittels welchem ein Hochvoltbatteriebrand im Falle eines Thermal Runaways verhindert werden kann. Insbesondere lässt sich ein Sicherheitskonzept bereitstellen, welches integriert in ein Hochvoltbatteriesystem zu einem NTP-Verhalten führen kann. Mit anderen Worten lässt sich durch dieses Sicherheitskonzept eine thermische Propagation stoppen und ein Gesamtbatteriebrand in der Batterie sowie auch außerhalb der Batterie verhindern. Das Sicherheitskonzept beinhaltet bevorzugt drei Hauptkomponenten, die im Gesamtverbund ihre Wirkung zeigen. Diese umfassen als erste Komponente definierte Wärmeleitpfade, insbesondere durch Nutzen der Wärmekapazität des Kühlsystems, durch thermische Anbindung der elektrischen Zellverbindungen und Zellen an Kühlmedien, und durch thermische Isolierung zwischen den Zellen, als zweite Komponente eine kontrollierte Gasführung, insbesondere durch einen eigenständigen Gaskanal, der bevorzugt an die Berstmembranöffnungen der Zellen mit einer Dichtung angebunden ist, und als dritte Komponente eine Partikelfilterung und Gaskühlung, insbesondere durch ein spezielles Filtersystem mit ausreichend großer Kühlkapazität. Geht eine Zelle folglich in ein Thermal Runaway, erfolgt keine Propagation im Hochvoltbatteriesystem und es resultiert kein Brand inner- und außerhalb des Hochvoltbatteriesystems.

## Patentansprüche

1. Batteriebrandverhinderungssystem (10) für eine mehrere Batteriezellen (14, 14a) umfassende Batterie (12) eines Kraftfahrzeugs zur Verhinderung eines aus einem thermischen Durchgehen einer ersten Batteriezelle (14a) der Batteriezellen (14, 14a) der Batterie (12) resultierenden Batteriebrands,
wobei das Batteriebrandverhinderungssystem (10) aufweist:
- einen an die Batteriezellen (14, 14a) der Batterie (12) anschließbaren Zellentgasungskanal (28), in welchen ein aus einer jeweiligen der Batteriezellen (14, 14a) austretendes Gas (30) einführbar und zu mindestens einer Austrittsöffnung (46) des Zellentgasungskanals (28) abführbar ist; und
- eine Gasstrombeeinflussungsstruktur (31) als Teil des Zellentgasungskanals (28), die dazu ausgelegt ist, den durch den Zellentgasungskanal (28) strömenden Gasstrom (30) in seinem Verlauf zu beeinflussen, der durch das aus der ersten Batteriezellen (14a) austretende Gas (30) gebildet ist;
**dadurch gekennzeichnet, dass**
- das Batteriebrandverhinderungssystem (10) eine Kühlmittelpumpe (22) zum Umwälzen eines Kühlmittels (20) innerhalb eines Kühlkreislaufs (23), eine Kühleinrichtung (18) zum Kühlen der thermisch durchgehenden ersten Batteriezellen (14a) und den Kühlkreislauf (23) aufweist, an den die Kühleinrichtung (18) angeschlossen oder anschließbar ist und durch welchen das Kühlmittel (20) durch Pumpen mittels der Kühlmittelpumpe (22) zum Kühlen der thermisch durchgehenden ersten Batteriezelle (14a) zirkuliebar ist,
- wobei die Kühleinrichtung (18) derart eingerichtet ist, dass sie von dem Kühlmittel (20) durchströmt wird, spätestens wenn die erste Batteriezellen (14a) thermisch durchgeht.

2. Batteriebrandverhinderungssystem (10) nach Anspruch 1,
**dadurch gekennzeichnet, dass**
die Gasstrombeeinflussungsstruktur (31) dazu ausgelegt ist, im Gasstrom (30) mitgeführte Partikel (34) zu filtern und/oder vom Erreichen der Austrittsöffnung (46) abzuhalten.

3. Batteriebrandverhinderungssystem (10) nach einem der vorhergehenden Ansprüche,
**dadurch gekennzeichnet, dass**
die Gasstrombeeinflussungsstruktur (31) dazu ausgelegt ist, eine Strömungsgeschwindigkeit des Gasstroms (30) zu verringern, insbesondere durch Umlenkung einer Strömungsrichtung des im Zellentgasungskanals (28) strömenden Gasstroms (30).

4. Batteriebrandverhinderungssystem (10) nach einem der vorhergehenden Ansprüche,
**dadurch gekennzeichnet, dass**
der Zellentgasungskanal (28) eine Wandung (28b, 42a) aufweist, die ein Inneres (40) des Zellentgasungskanals (28) von einer Umgebung (44) separiert, wobei die Gasstrombeeinflussungsstruktur (31) in dem Inneren (40) des Zellentgasungskanals (28) angeordnet ist.

5. Batterieanordnung mit einem Batteriebrandverhinderungssystem (10) nach einem der vorhergehenden Ansprüche.

6. Batterieanordnung nach Anspruch 5,
**dadurch gekennzeichnet, dass**
die Batterieanordnung die Batterie (12) mit den mehreren Batteriezellen (14, 14a) umfasst, wobei eine jeweilige der Batteriezellen (14, 14a) eine freigebbare Entgasungsöffnung (16) aufweist, die an eine zugeordnete, zumindest freigebbare Eintrittsöffnung (28a) des Zellentgasungskanals (28) mittels einer Dichtung abgedichtet angeschlossen ist, die dazu ausgelegt ist, ein aus der Entgasungsöffnung (16) austretendes Gas (30) am Ausringen in eine Umgebung (44) des Zellentgasungskanals (28) zumindest zum Teil zu hindern.

7. Batterieanordnung nach einem der Ansprüche 5 oder 6,
**dadurch gekennzeichnet, dass**
die Kühleinrichtung (18) mit mindestens einer Seite einer jeweiligen der Batteriezellen (14, 14a) verbunden ist und/oder über eine elektrische Isolierung an Zellverbindern (26) angeordnet ist, mittels welchen die Batteriezellen (14, 14a) elektrisch verschaltet sind.

8. Batterieanordnung nach einem der Ansprüche 5 bis 7,
**dadurch gekennzeichnet, dass**
zwischen je zwei benachbart angeordneten Batteriezellen (14, 14a) der mehreren Batteriezellen (14, 14a) ein thermisches Isolationselement (38) angeordnet ist.

9. Kraftfahrzeug mit einer Batterieanordnung nach einem der Ansprüche 5 bis 8.

10. Verfahren zur Verhinderung eines aus einem thermischen Durchgehen einer ersten Batteriezellen (14a) von mehreren Batteriezellen (14, 14a) einer Batterie (12) resultierenden Batteriebrands,
- wobei in einen an die Batteriezellen (14, 14a) der Batterie (12) angeschlossenen Zellentgasungskanal (28) ein aus der ersten Batteriezellen (14a) austretendes Gas (30) eingeführt und zu mindestens einer Austrittsöffnung (46) des Zellentgasungskanals (28) abgeführt wird; und
- der Gasstrom (30), der durch das aus der ersten Batteriezellen (14a) austretende Gas (30) gebildet ist, durch eine Gasstrombeeinflussungsstruktur (31) als Teil des Zellentgasungskanals (28) in seinem Verlauf beeinflusst wird;
**dadurch gekennzeichnet, dass**
- eine Kühlmittelpumpe (22) Kühlmittel (20) innerhalb eines Kühlkreislaufs (23) umwälzt, an den eine Kühleinrichtung (18) zum Kühlen der thermisch durchgehenden ersten Batteriezellen (14a) angeschlossen ist, und durch welchen das Kühlmittel (20) durch Pumpen mittels der Kühlmittelpumpe (22) zum Kühlen der thermisch durchgehenden ersten Batteriezelle (14a) zirkuliert wird,
- wobei zumindest die thermisch durchgehende erste Batteriezelle (14a) durch die Kühleinrichtung (18) gekühlt wird, die von dem Kühlmittel (20) durchströmt wird.

## Claims

1. Battery fire prevention system (10) for a battery (12) of a motor vehicle comprising a plurality of battery cells (14, 14a) for preventing a battery fire resulting from a thermal runaway of a first battery cell (14a) of the battery cells (14, 14a) of the battery (12),
wherein the battery fire prevention system (10) has:
- a cell degassing channel (28) which can be connected to the battery cells (14, 14a) of the battery (12) and into which a gas (30) exiting one of the battery cells (14, 14a) can be introduced and discharged to at least one outlet opening (46) of the cell degassing channel (28); and
- a gas flow influencing structure (31) as part of the cell degassing channel (28), which structure is designed to influence the course of the gas flow (30) which flows through the cell degassing channel (28) and which is formed by the gas (30) exiting the first battery cell (14a);
**characterized in that**
- the battery fire prevention system (10) has a coolant pump (22) for circulating a coolant (20) within a cooling circuit (23), a cooling device (18) for cooling the first battery cells (14a) undergoing thermal runaway, and the cooling circuit (23) to which the cooling device (18) is connected or can be connected and through which the coolant (20) can be circulated by pumping by the coolant pump (22) in order to cool the first battery cell (14a) undergoing thermal runaway,
- wherein the cooling device (18) is configured such that the coolant (20) flows through it, at the latest when the first battery cell (14a) undergoes thermal runaway.

2. Battery fire prevention system (10) according to claim 1,
**characterized in that**
the gas flow influencing structure (31) is designed to filter particles (34) carried in the gas flow (30) and/or to prevent them from reaching the outlet opening (46).

3. Battery fire prevention system (10) according to any one of the preceding claims,
**characterized in that**
the gas flow influencing structure (31) is designed to reduce a flow velocity of the gas flow (30), in particular by redirecting a flow direction of the gas flow (30) flowing in the cell degassing channel (28).

4. Battery fire prevention system (10) according to any one of the preceding claims,
**characterized in that**
the cell degassing channel (28) has a wall (28b, 42a) which separates an interior (40) of the cell degassing channel (28) from an environment (44), wherein the gas flow influencing structure (31) is arranged in the interior (40) of the cell degassing channel (28).

5. Battery arrangement having a battery fire prevention system (10) according to any one of the preceding claims.

6. Battery arrangement according to claim 5,
**characterized in that**
the battery arrangement comprises the battery (12) with the plurality of battery cells (14, 14a), wherein a respective one of the battery cells (14, 14a) has an exposable degassing opening (16) which is connected to an associated, at least exposable inlet opening (28a) of the cell degassing channel (28) in a sealed manner by a seal which is designed to at least partially prevent a gas exiting the degassing opening (16) from emerging into an environment (44) of the cell degassing channel (28).

7. Battery arrangement according to any one of claims 5 or 6,
**characterized in that**
the cooling device (18) is connected to at least one side of a respective one of the battery cells (14, 14a) and/or is arranged, via an electrical insulation, on cell connectors (26) by means of which the battery cells (14, 14a) are electrically connected.

8. Battery arrangement according to any one of claims 5 to 7,
**characterized in that**
a thermal insulation element (38) is arranged between each two adjacent battery cells (14, 14a) of the plurality of battery cells (14, 14a).

9. Motor vehicle with a battery arrangement according to any one of claims 5 to 8.

10. Method for preventing a battery fire resulting from a thermal runaway of a first battery cell (14a) of a plurality of battery cells (14, 14a) of a battery (12),
- wherein a gas (30) exiting the first battery cell (14a) is introduced into a cell degassing channel (28) connected to the battery cells (14, 14a) of the battery (12) and is discharged to at least one outlet opening (46) of the cell degassing channel (28); and
- the course of the gas flow (30) which is formed by the gas exiting the first battery cells (14a) is influenced by a gas flow influencing structure (31) as part of the cell degassing channel (28);
**characterized in that**
- a coolant pump (22) circulates coolant (20) within a cooling circuit (23) to which a cooling device (18) for cooling the first battery cells (14a) undergoing thermal runaway is connected and through which the coolant (20) is circulated by pumping by the coolant pump (22) in order to cool the first battery cell (14a) undergoing thermal runaway,
- wherein at least the first battery cell (14a) undergoing thermal runaway is cooled by the cooling device (18) through which the coolant (20) flows.

## Revendications

1. Système de prévention d'incendie de batterie (10) pour une batterie (12) d'un véhicule automobile comprenant plusieurs cellules de batterie (14, 14a) pour prévenir un incendie de batterie résultant d'un emballement thermique d'une première cellule de batterie (14a) des cellules de batterie (14, 14a) de la batterie (12),
dans lequel le système de prévention d'incendie de batterie (10) présente :
- un canal de dégazage de cellules (28) pouvant être raccordé aux cellules de batterie (14, 14a) de la batterie (12), dans lequel un gaz (30) sortant d'une des cellules de batterie (14, 14a) respective peut être introduit et évacué vers au moins une ouverture de sortie (46) du canal de dégazage de cellules (28) ; et
- une structure d'influence de flux de gaz (31) en tant que partie du canal de dégazage de cellules (28) qui est conçue pour influencer le parcours flux de gaz (30) s'écoulant à travers le canal de dégazage de cellules (28), qui est formé par le gaz (30) sortant des premières cellules de batterie (14a) ;
**caractérisé en ce que**
- le système de prévention d'incendie de batterie (10) présente une pompe à réfrigérant (22) pour faire circuler un réfrigérant (20) à l'intérieur d'un circuit de refroidissement (23), un appareil de refroidissement (18) pour refroidir les premières cellules de batterie (14a) subissant un emballement thermique et le circuit de refroidissement (23) auquel l'appareil de refroidissement (18) est raccordé ou peut être raccordé et à travers lequel le réfrigérant (20) peut être mis en circulation par pompage au moyen de la pompe à réfrigérant (22) pour refroidir les premières cellules de batterie (14a) subissant un emballement thermique,
- dans lequel l'appareil de refroidissement (18) est configuré de sorte qu'il est traversé par le réfrigérant (20) au plus tard lorsque la première cellule de batterie (14a) subit un emballement thermique.

2. Système de prévention d'incendie de batterie (10) selon la revendication 1,
**caractérisé en ce que**
la structure d'influence de flux de gaz (31) est conçue pour filtrer et/ou empêcher des particules (34) véhiculées dans le flux de gaz (30) d'atteindre l'ouverture de sortie (46).

3. Système de prévention d'incendie de batterie (10) selon l'une quelconque des revendications précédentes,
**caractérisé en ce que**
la structure d'influence de flux de gaz (31) est conçue pour réduire une vitesse d'écoulement du flux de gaz (30), en particulier en déviant une direction d'écoulement du flux de gaz (30) s'écoulant dans le canal de dégazage de cellules (28).

4. Système de prévention d'incendie de batterie (10) selon l'une quelconque des revendications précédentes,
**caractérisé en ce que**
le canal de dégazage de cellules (28) présente une paroi (28b, 42a) qui sépare un intérieur (40) du canal de dégazage de cellules (28) d'un environnement (44), dans lequel la structure d'influence de flux de gaz (31) est disposée dans l'intérieur (40) du canal de dégazage de cellules (28).

5. Ensemble de batterie avec un système de prévention d'incendie de batterie (10) selon l'une quelconque des revendications précédentes.

6. Ensemble de batterie selon la revendication 5,
**caractérisé en ce que**
l'ensemble de batterie comprend la batterie (12) avec les plusieurs cellules de batterie (14, 14a), dans lequel une des cellules de batterie (14, 14a) respective présente une ouverture de dégazage (16) libérable qui est raccordée de manière étanche à une ouverture d'entrée (28a) au moins libérable du canal de dégazage de cellules (28) au moyen d'un joint qui est conçu pour empêcher au moins en partie un gaz (30) sortant de l'ouverture de dégazage (16) de s'échapper dans un environnement (44) du canal de dégazage de cellules (28).

7. Ensemble de batterie selon l'une quelconque des revendications 5 ou 6,
**caractérisé en ce que**
l'appareil de refroidissement (18) est connecté à au moins un côté d'une des cellules de batterie (14, 14a) respective et/ou est disposé par l'intermédiaire d'une isolation électrique sur des connecteurs de cellules (26) au moyen desquels les cellules de batterie (14, 14a) sont connectées électriquement.

8. Ensemble de batterie selon l'une quelconque des revendications 5 à 7,
**caractérisé en ce que**
un élément d'isolation thermique (38) est disposé entre deux cellules de batterie (14, 14a) disposées de manière adjacente des plusieurs cellules de batterie (14, 14a).

9. Véhicule automobile avec un ensemble de batterie selon l'une quelconque des revendications 5 à 8.

10. Procédé pour prévenir un incendie de batterie résultant d'un emballement thermique d'une première cellule de batterie (14a) parmi plusieurs cellules de batterie (14, 14a) d'une batterie (12),
- dans lequel un gaz (30) sortant de la première cellule de batterie (14a) est introduit dans un canal de dégazage de cellules (28) raccordé aux cellules de batterie (14, 14a) de la batterie (12) et est évacué vers au moins une ouverture de sortie (46) du canal de dégazage de cellules (28) ; et
- le parcours du flux de gaz (30) qui est formé par le gaz (30) sortant des premières cellules de batterie (14a) est influencé par une structure d'influence de flux de gaz (31) en tant que partie du canal de dégazage de cellules (28) ;
**caractérisé en ce que**
- une pompe à réfrigérant (22) fait circuler un réfrigérant (20) à l'intérieur d'un circuit de refroidissement (23) auquel un appareil de refroidissement (18) est raccordé pour refroidir les premières cellules de batterie (14a) subissant un emballement thermique et à travers lequel le réfrigérant (20) est mis en circulation par pompage au moyen de la pompe à réfrigérant (22) pour refroidir la première cellule de batterie (14a) subissant un emballement thermique,
- dans lequel au moins la première cellule de batterie (14a) subissant un emballement thermique est refroidie par l'appareil de refroidissement (18) qui est traversé par le réfrigérant (20).
